# EUROPEAN PATENT SPECIFICATION

(11) **EP 3 446 928 B1**
(45) Date of publication and mention of the grant of the patent: **17.06.2020**
(21) Application number: 17187738.4
(22) Date of filing: 24.08.2017
(51) Int. Cl.: B60R 11/04, B60R 11/00

(54) **IMAGING SYSTEM FOR A MOTOR VEHICLE**
ABBILDUNGSSYSTEM FÜR EIN KRAFTFAHRZEUG
SYSTÈME D'IMAGERIE POUR VÉHICULE À MOTEUR

(43) Date of publication of application: 27.02.2019
(73) Proprietor: Veoneer Sweden AB, 447 83 Vårgårda (SE)
(72) Inventor: Persson, Madeleine, 58236 Linköping (SE); Lingehed, Vincent, 58230 Linköping (SE)
(74) Representative: Müller Verweyen

(56) References cited:
- EP-A1- 2 965 949
- JP-A- 2013 144 475
- US-A1- 2015 042 874

## Description

The invention relates to an imaging system for a motor vehicle comprising the features of the preamble of claim 1.

Imaging systems for a motor vehicle that are used for imaging and monitoring the conditions ahead of the vehicle are often disposed at a portion which is the inner surface of a windshield of the motor vehicle. The imaging system has to be correctly mounted at a predetermined position on the windshield to image the conditions ahead of the vehicle. Preferred is a position in the area of a rearview mirror to avoid limitation of the field of view of a vehicle driver. To minimize installation space of the imaging system it is preferred that the camera lens is positioned close to the windshield, which is usually arranged in a tilted angle. To avoid background reflections, a phenomenon where the light from the inside of the vehicle is reflected by the inner surface of the windshield, thereby entering the camera, a light trap is provided sealing the space between the camera lens and the windshield.

In the assembly process of an imaging system for a motor vehicle, the camera module is usually aligned regarding roll angle and tilt angle to avoid deterioration of the image quality. Therefore, attachment brackets are provided, which are to be attached to the windshield. Usually, the camera housing is attached to the brackets and a separate light trap is attached to the housing.

In the US 2015/0042804 A1 it is suggested that a bracket, which is arranged to be attached at the windshield of a motor vehicle, comprises hook portions which are arranged at the bracket. The hook portions represent fixation means for the camera housing and positioning means at once. The hook portions project downwardly from the bracket, therefore increasing the height of the bracket. The camera housing comprises a trapezoidal recess designed for reception of a separate light trap.

EP2965949 A1 discloses an imaging system for a motor vehicle according to the preamble of claim 1.

During production, it is advantageous to mount as much components as possible before final assembly of the motor vehicle. Therefore, the attachment components of the imaging system are pre-mounted to the windshield at the windshield supplier and transported to the motor vehicle construction site. The windshields are stacked during transport. Therefore, the stacking height is limited and pre-mounted components should consume low stacking height to save space.

The problem underlying the present invention is to provide an in-vehicle imaging system with an improved attachment of the camera module to a windshield of a motor vehicle.

The invention solves this object with the features of the independent claims, while further preferred embodiments are contained in the subclaims, in the figures and the related description.

According to the basic idea of the invention it is suggested that the imaging system comprises a bracket to be attached to an inner surface of a windshield of a motor vehicle, a camera housing and a light blocking element. The camera housing is provided with positioning elements which are form-fitting to corresponding positioning elements provided at the bracket. The light blocking element is provided with fixating elements, fixating the light blocking element to the bracket. The camera housing is fixated by being clamped between the bracket and the light blocking element.

The suggested imaging system comprises several advantages. First of all, there are only a few parts to install to gain an assembled imaging system. Assembling is further facilitated to only two steps. First, the bracket is attached to the windshield, preferably at the windshield supplier. Therefore, the bracket includes an attachment surface that is attached to the windshield. The attachment surface is formed to flat shape in order to extend along the glass surface of a windshield, to which the bracket is attached. The attachment of the bracket is preferably realized by being glued to the windshield. The remaining parts, i.e. the light blocking element and the camera housing, are attached in a single step. By providing the light blocking element with fixating elements and clamping the camera housing between the light blocking element and the bracket, a simplified attachment is provided. Especially, the light blocking element needs no second installation step, unlike it is known from prior art systems. With the suggested solution, installing the imaging system without a light blocking element is impossible, since the camera housing cannot be installed without the light blocking element. Furthermore, since the positioning elements are located at the camera housing, tolerance chains for boresight pitch, yaw and roll angles of the camera can be minimized and there is no further need for positioning the camera housing correctly with respect to a predetermined attachment position and orientation. The integrated positioning elements only allow for attachment in a single predetermined aligned position of the camera housing.

Therefore, fixation and alignment of the imaging system can be accomplished in a single step. Furthermore, the stacking height for transport of the windshield with pre-mounted bracket is reduced, since the fixating elements are provided at the light blocking element, therefore, the bracket can be realized in a flat design.

Furthermore, the fixating elements provided at the light blocking element may comprise a leg portion extending from the light blocking element towards the bracket in the attachment position of the imaging system and a hook portion at the distant end of the leg portion. The bracket may comprise recesses that engage with the hook portions in the attachment position of the imaging system. The advantage of this embodiment is that the light blocking element may be easily fixated to the bracket. The hook portions are pushed over the bracket while the leg portions are slightly pushed outwardly due to elastic deformation until the hook portions clip behind the recesses of the bracket to the attachment position.

Furthermore, it is suggested that the light blocking element may comprise second fixating elements and the second fixating elements engage with the camera housing when the imaging system is in the attachment position. Preferably, the positioning elements of the camera housing are clamped between the positioning elements of the bracket and the second fixating elements of the light blocking element. Assembling the imaging system is facilitated by this embodiment, since the number of features of the camera housing needed for assembling and positioning the camera is reduced. With the camera housing being clamped between the positioning elements of the bracket and the second fixating elements of the light blocking element, a compact solution is presented. All relevant features for assembling and positioning are located in the same portion of the camera housing, since the positioning elements of the camera housing perform combined positioning and fixating. Therefore, the fixation is additionally stabilizing the positioning of the camera housing and improving the tolerances of the camera in respect to boresight pitch tilt angles and roll angles of the relevant camera components located in the camera housing, i.e. lens and imaging sensor.

According to a further preferred embodiment it is suggested that the second fixating elements are spring loaded against the positioning elements of the camera housing in the attachment position. The advantage of the suggested embodiment can be seen therein that because of the spring loading a degree of freedom is introduced, which improves handling of the imaging system during the attachment process. The fixation can be therefore realized with less tension in the camera housing and in the light blocking element. While pushing the fixating elements of the light blocking element against the camera housing and the bracket, less effort is needed to bring the hook portions in position to snap into the corresponding recesses of the bracket.

It is further preferred that the second fixating elements are made of an elastically deformable material. To gain a stabilized fixation, the distance between the recesses where the hook portions of the first fixating elements of the light blocking element engage and the interface where the second fixating elements engage the positioning elements of the camera housing, has to be adapted to the combined height of the bracket and the relevant parts of the camera housing, otherwise, the camera housing cannot be clamped. Therefore, the second fixating elements can balance different tolerances and roughness in a simple and cost-saving manner if they are made from an elastically deformable material, e.g. rubber-like plastics.

According to a further preferred embodiment it is suggested that the second fixating elements comprise separate spring elements pushing the camera housing against the bracket in the attachment position. The spring elements are furthermore designed to fix the camera housing by constantly pushing the camera housing against the bracket in the attachment position and are able to compensate small vibrations and to reduce therefore negative effects on the camera parts and the signal generated therein resulting from for example off road driving or bad street conditions.

Furthermore, it is suggested that the spring elements comprise at least one separate metal spring. The suggested solution realizes the stabilizing and balancing effects in an easy and cost-saving manner, since metal springs, for example leaf springs or coil springs, represent an effective way to constantly push the camera housing in the attachment position and facilitate handling during assembly.

Furthermore, it is suggested that the positioning element provided at the bracket comprises a recess, which engages the fixating element of the light blocking element when the imaging system is in the attachment position. The advantage of the suggested solution is that the positioning element of the bracket and the fixation element of the bracket are combined in a compact way. Therefore, the bracket can be realized in a light and flat design with only a few portions for fixation and positioning the camera housing. Assembling the imaging system can therefore be accomplished in an easy and fast manner.

In the following the invention shall be illustrated on the basis of preferred embodiments with reference to the accompanying drawings, wherein:
- Fig. 1: shows a schematic view of an example of a mounting position of the imaging system at the windshield of a motor vehicle;
- Fig. 2: shows a schematic front view of an embodiment of the imaging system

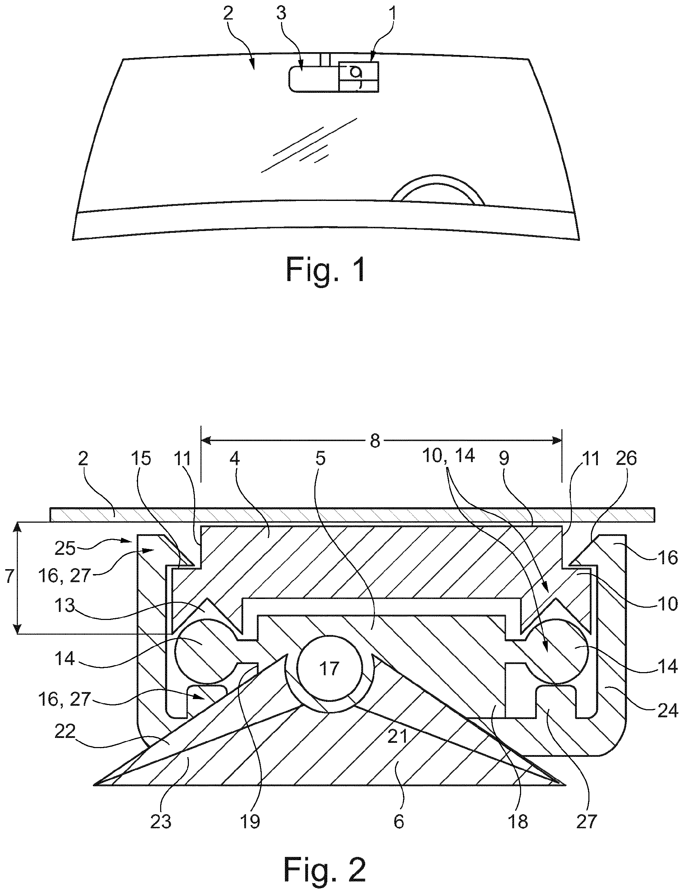

In the embodiment shown in Fig. 1, the imaging system 1 is disposed at a portion of the inner surface of the windshield 2 and behind the rearview mirror 3. In this configuration, the camera is directed to the front side of the motor vehicle, which is the forward direction into which the motor vehicle usually moves.

The imaging system 1 of this embodiment may be used for imaging conditions ahead of the motor vehicle and correctly detecting the positions of for example lane markers, traffic lights, traffic signs, presence of oncoming vehicles and vehicles running ahead of the camera. Therefore, it is required to correctly attach the imaging system, so that the camera is fixated and aligned.

The mounted imaging system 1 is schematically shown in Fig. 2 in a frontal view. The imaging system 1 is in its attachment position, in which the bracket 4, the camera housing 5 and the light blocking element 6 are mounted to a windshield 2 of a motor vehicle.

In the shown embodiment, the bracket 4 is realized in a flat design in which the height 7 of the bracket 4 is smaller than its width 8. An attachment surface 9 of the bracket 4 is attached to the windshield 2. It is formed into a flat shape, therefore extending along the glass surface in a portion of the windshield 2. The attachment surface 9 has a shape substantially covering the camera housing 5. It should be small and compact and may not extend over the dimensions of the camera housing 5 to save space. The bracket 4 is attached to the windshield 2 at a stage where the windshield 2 has been fabricated but is yet to be installed in the motor vehicle at the assembly line of the motor vehicle construction site. Preferably, the bracket 4 is attached to the windshield 2 by applying an adhesive to the attachment surface 9 and sticking the bracket 4 onto the surface of the windshield 2 at its predetermined position. The bracket 4 is preferably pre-mounted to the windshield 2 in advance at the windshield supplier's site and transported to the assembly line. A cost-effective transport limits the stacking height of the windshields 2. Therefore, the height 7 of the pre-mounted bracket 4 may not exceed a critical maximum height. Otherwise stacking of the windshields 2 with pre-mounted brackets 4 is not possible. The suggested solution of this embodiment drastically reduces the total height 7 of the bracket 4, approximately to a half of the height of prior art systems, and allows for a flat design. This is because all elements that are needed for attaching and fixating the other components, i.e. the camera housing 5 and the light blocking element 6, are provided at these other components. Therefore, no extending devices are provided at the bracket 4, which would increase the height 7 of the bracket 4. The width 8 of the bracket 4 is determined by the positioning elements 10 that are provided at the bracket 4. In the shown embodiment in Fig. 2, the positioning elements 10 are located at the outermost left and right portions 11 of the bracket 4, representing the maximum transverse dimension of the bracket 4. The positioning elements 10 provided at the bracket 4 are realized as triangular cuts 13, which may extend in a direction perpendicular to the presented front view, building a channel. The cross section may be adapted to corresponding positioning elements 14 provided at the camera housing 5 to form-fit the corresponding positioning elements 14 at the camera housing 5. The bracket's 4 positioning elements 10 may partially embrace the positioning elements 14 of the camera housing 5 in order to minimize the movement of the camera housing 5 in the attachment position and to define an aligned position of the camera housing 5. The scope of the present invention is not restricted to the location and design of the presented embodiment. It may also be possible to locate the positioning elements 10 at another portion of the bracket or to change the design or number of the positioning elements 10. Even the shown dimensions have to be understood schematically. Preferably, the positioning elements 10 should be realized as flat as possible in order to not add gratuitous height to the total height 7 of the bracket 4. In an alternative embodiment, the positioning elements 10 may not be provided at the bracket 4 but at the light blocking element 6.

Recesses 15 are built, each at the left and right side 11 of the bracket 4 in connection with the positioning elements 10. The recesses 15 are built to engage with the corresponding fixating elements 16 provided at the light blocking element 6. The recesses 15 are realized as a step in the outermost left and right surfaces 11 of the bracket 4 and the backside of the positioning elements 10. The scope of the present invention is not restricted to the shown embodiment. The recesses 15 may also be realized separated from the positioning elements 10. But preferably, the fixating elements 16 and positioning elements 10 should be designed in a compact manner, therefore the assembling becomes easier, if all relevant assembling elements 10, 14 are located at the same portion of the bracket 4.

The imaging system 1 comprises a camera module to be mounted to the camera housing part 5. The camera module comprises the technical key elements of the imaging system 1, i.e. a lens objective 17, a lens holder holding said lens objective, an image sensor and corresponding electrical controls of the image sensor. The camera module is arranged in a camera housing part 5. The lens objective 17 is located at the front wall 18 of the camera housing 5 and is directed to the front side, since the camera should image the situation ahead of the motor vehicle. The camera housing 5 comprises positioning elements 14, each at the left and right side 19 of the camera housing 5. The positioning elements 14 are adapted to the corresponding positioning elements 10 provided at the bracket 4 and should engage when the imaging system 1 is in the attachment position.

In order to avoid background deflections (light from the inside of the vehicle reflected by the inner surface of the windshield 2, thereby entering the camera), a light blocking element 6, a so called light-trap, is provided. The light blocking element 6 creates an inhibition space 21 into which no light from the outside can intrude except from the front side to which the camera lens 17 is directed. Here, the inhibition space 21 is formed between the lens objective 17 and the windshield 2 when the imaging system 1 is in its attachment position, and which is defined by the angle of field of the camera lens 17. Therefore, the light blocking element 6 has a substantially trapezoidal design and the width is increasing as the distance to the lens 17 increases. To the left and right side the inhibition space 21 is limited by side wall sections 22 extending from the trapezoidal surface 23 upwards to the windshield 2 when the imaging system 1 is in the attachment position. The exact dimensions of the light blocking element 6 may be adapted to the tilt angle of the windshield 2. The camera lens 17 may not be located in the center of the front wall 18 of the camera housing 5 but also embodiments with an off-centered lens position may be realized. In any case, the light blocking element 6 should be adapted to the lens position and the light blocking element 6 should be centered to the lens position at the camera housing 5.

The light blocking element 6 comprises first fixating elements 16, fixating the light blocking element 6 to the bracket 4, and the camera housing 5 is fixated by being clamped between the bracket 4 and the light blocking element 6. These first fixating elements 16 comprise a leg portion 24 extending from the light blocking element 6 towards the bracket 4 in the attachment position of the imaging system 1 and a hook portion 25 at the distant end of the leg portion 24. The hook portions 25 are designed to engage with the recesses 15 provided at the bracket 4. The attachment process is realized by pushing the light blocking element 6 upwards until the hooks 25 snap into the recesses 15. During the pushing process, the camera housing 5 is placed between the light blocking element 6 and the bracket 4 in a way that the positioning elements 14 of the camera housing 5 can engage with the corresponding positioning elements 10 of the bracket 4. In order to facilitate the pushing of the hooks 25 along the side walls 11 of the bracket 4, the hooks 25 may comprise a tilted front-end surface 26. The light blocking element 6 comprises protrusions, acting as second fixating elements 27. These are designed to engage with the positioning elements 14 of the camera housing 5 in order to fix the position of the camera housing 5 in the attachment position. The second fixating elements 27 are preferably made of an elastically deformable material, e.g. rubber-like plastics. To gain a stabilized fixation, the distance between the recess 15 where the hook portions 25 of the first fixating elements 16 of the light blocking element 6 engage and the interface where the second fixating elements 27 engage the positioning elements 14 of the camera housing 5, has to be adapted to the combined height of the bracket 4 and the camera housing 5. Otherwise, the camera housing 5 cannot be clamped. Therefore, the second fixating elements 27 can balance different tolerances and surface roughness and facilitate the attachment process.

In order to facilitate the clamping effect of the camera housing 5, it may be advantageous if the camera housing 5 is constantly pushed by force against the positioning elements 10 of the bracket 4. This may be accomplished by providing spring element in the area of the protrusions 27. The camera housing 5 is then spring loaded and constantly pushed against the bracket 4. The spring elements may be realized by for example leaf springs or coil springs. The spring elements are able to compensate small vibrations and to reduce therefore negative effects on the camera parts and the signal generated therein resulting from for example off road driving or bad street conditions.

## Claims

1. An imaging system (1) for a motor vehicle, comprising
- a bracket (4) to be attached to an inner surface of a windshield (2) of a motor vehicle and
- a camera housing (5) and
- a light blocking element (6),
- the camera housing (5) is provided with positioning elements (14) which are form-fitting to corresponding positioning elements (10) provided at the bracket (4) and/or the Light blocking element (6), **characterized in that**
- the light blocking element (6) is provided with fixating elements (16), fixating the light blocking element (6) to the bracket (4), and the camera housing (5) is fixated by being clamped between the bracket (4) and the light blocking element (6).

2. An imaging system (1) according to claim 1, **characterized in that**,
- the fixating elements (16) provided at the light blocking element (6) comprise a leg portion (24) extending from the light blocking element (6) towards the bracket (4) in the attachment position of the imaging system (1) and a hook portion (25) at the distant end of the leg portion (24); and
- the bracket (4) comprises recesses (15) that engage with the hook portions (25) in the attachment position of the imaging system (1).

3. An imaging system (1) according to one of the preceding claims, **characterized in that**,
- the light blocking element (6) comprises second fixating elements (27) and the second fixating elements (27) engage with the positioning elements (14) provided at the camera housing (5) when the imaging system (1) is in the attachment position.

4. An imaging system (1) according to claim 3, **characterized in that**,
- the positioning elements (14) of the camera housing (5) are clamped between the positioning elements (10) of the bracket (4) and the second fixating elements (27) of the light blocking element (6).

5. An imaging system (1) according to claim 4, **characterized in that**,
- the second fixating elements (27) are spring loaded against the positioning elements (14) of the camera housing (5) in the attachment position.

6. An imaging system (1) according to claim 5, **characterized in that**,
- the second fixating elements (27) are made of an elastically deformable material.

7. An imaging system (1) according to claim 6, **characterized in that**,
- the second fixating elements (27) comprise spring elements pushing the camera housing (5) against the bracket (4) in the attachment position.

8. An imaging system (1) according to claim 7, **characterized in that**,
- the spring elements comprise at least one separate metal spring.

9. An imaging system (1) according to one of the preceding claims, **characterized in that**,
- the positioning element (10) provided at the bracket (4) comprises a recess (15), which engages the fixating element (16) of the light blocking element (6) when the imaging system (1) is in the attachment position.

## Patentansprüche

1. Ein Bilderzeugungssystem (1) für ein Kraftfahrzeug, wobei das Bilderzeugungssystem umfasst:
- eine Halterung (4), die an einer Innenoberfläche einer Windschutzscheibe (2) eines Kraftfahrzeugs zu befestigen ist, und
- ein Kameragehäuse (5) und
- ein Lichtsperrelement (6),
- wobei das Kameragehäuse (5) mit Positionierelementen (14) versehen ist, die mit entsprechenden Positionierelementen (10), die an der Halterung (4) und/oder an dem Lichtsperrelement (6) vorgesehen sind, formschlüssig sind, **dadurch gekennzeichnet, dass**
- das Lichtsperrelement (6) mit Befestigungselementen (16) versehen ist, die das Lichtsperrelement (6) an der Halterung (4) befestigen, und dass das Kameragehäuse (5) dadurch befestigt wird, dass es zwischen die Halterung (4) und das Lichtsperrelement (6) geklemmt wird.

2. Ein Bilderzeugungssystem (1) nach Anspruch 1, **dadurch gekennzeichnet, dass**
- die an dem Lichtsperrelement (6) vorgesehenen Befestigungselemente (16) einen Schenkelabschnitt (24), der in der Anbringungsstellung des Bilderzeugungssystems (1) von dem Lichtsperrelement (6) zu der Halterung (4) verläuft, und einen Hakenabschnitt (25) an dem fernen Ende des Schenkelabschnitts (24) umfassen; und
- die Halterung (4) Aussparungen (15) umfasst, die mit den Hakenabschnitten (25) in der Anbringungsstellung des Bilderzeugungssystems (1) in Eingriff sind.

3. Ein Bilderzeugungssystem (1) nach einem der vorhergehenden Ansprüche, **dadurch gekennzeichnet, dass**
- das Lichtsperrelement (6) zweite Befestigungselemente (27) umfasst und die zweiten Befestigungselemente (27) mit den an dem Kameragehäuse (5) vorgesehenen Positionierelementen (14) in Eingriff sind, wenn das Bilderzeugungssystem (1) in der Anbringungsstellung ist.

4. Ein Bilderzeugungssystem (1) nach Anspruch 3, **dadurch gekennzeichnet, dass**
- die Positionierelemente (14) des Kameragehäuses (5) zwischen die Positionierelemente (10) der Halterung (4) und die zweiten Befestigungselemente (27) des Lichtsperrelements (6) geklemmt sind.

5. Ein Bilderzeugungssystem (1) nach Anspruch 4, **dadurch gekennzeichnet, dass**
- die zweiten Befestigungselemente (27) in der Anbringungsstellung gegen die Positionierelemente (14) des Kameragehäuses (5) federbelastet sind.

6. Ein Bilderzeugungssystem (1) nach Anspruch 5, **dadurch gekennzeichnet, dass**
- die zweiten Befestigungselemente (27) aus einem elastisch verformbaren Material hergestellt sind.

7. Ein Bilderzeugungssystem (1) nach Anspruch 6, **dadurch gekennzeichnet, dass**
- die zweiten Befestigungselemente (27) Federelemente umfassen, die das Kameragehäuse (5) in der Anbringungsstellung gegen die Halterung (4) drücken.

8. Ein Bilderzeugungssystem (1) nach Anspruch 7, **dadurch gekennzeichnet, dass**
- die Federelemente wenigstens eine getrennte Metallfeder umfassen.

9. Ein Bilderzeugungssystem (1) nach einem der vorhergehenden Ansprüche, **dadurch gekennzeichnet, dass**
- das an der Halterung (4) vorgesehene Positionierelement (10) eine Aussparung (15) umfasst, die mit dem Befestigungselement (16) des Lichtsperrelements (6) in Eingriff ist, wenn das Bilderzeugungssystem (1) in der Anbringungsstellung ist.

## Revendications

1. Un système d'imagerie (1) pour un véhicule à moteur, comprenant :
- un support (4) à attacher à une surface interne d'un pare-brise (2) d'un véhicule à moteur et
- un boîtier de caméra (5) et
- un élément de blocage de lumière (6),
- le boîtier de caméra (5) est pourvu d'éléments de positionnement (14) qui sont adaptables en forme à des éléments de positionnement (10) correspondants prévus au niveau du support (4) et/ou de l'élément de blocage de lumière (6),
**caractérisé en ce que**
- l'élément de blocage de lumière (6) est pourvu d'éléments de fixation (16), fixant l'élément de blocage de lumière (6) au support (4), et le boîtier de caméra (5) est fixé en étant serré entre le support (4) et l'élément de blocage de lumière (6).

2. Un système d'imagerie (1) selon la revendication 1, **caractérisé en ce que**
- les éléments de fixation (16) prévus au niveau de l'élément de blocage de lumière (6) comprennent une portion de jambe (24) s'étendant depuis l'élément de blocage de lumière (6) vers le support (4) dans la position d'attache du système d'imagerie (1) et une portion de crochet (25) au niveau de l'extrémité distante de la portion de jambe (24) ; et
- le support (4) comprend des évidements (15) qui s'engagent avec les portions de crochet (25) dans la position d'attache du système d'imagerie (1).

3. Un système d'imagerie (1) selon l'une des revendications précédentes, **caractérisé en ce que**
- l'élément de blocage de lumière (6) comprend des seconds éléments de fixation (27) et les seconds éléments de fixation (27) s'engagent avec les éléments de positionnement (14) prévus au niveau du boîtier de caméra (5) lorsque le système d'imagerie (1) se trouve dans la position d'attache.

4. Un système d'imagerie (1) selon la revendication 3, **caractérisé en ce que**
- les éléments de positionnement (14) du boîtier de caméra (5) sont serrés entre les éléments de positionnement (10) du support (4) et les seconds éléments de fixation (27) de l'élément de blocage de lumière (6).

5. Un système d'imagerie (1) selon la revendication 4, **caractérisé en ce que**
- les seconds éléments de fixation (27) sont sollicités par ressort contre les éléments de positionnement (14) du boîtier de caméra (5) dans la position d'attache.

6. Un système d'imagerie (1) selon la revendication 5, **caractérisé en ce que**
- les seconds éléments de fixation (27) sont réalisés en un matériau élastiquement déformable.

7. Un système d'imagerie (1) selon la revendication 6, **caractérisé en ce que**
- les seconds éléments de fixation (27) comprennent des éléments de ressort poussant le boîtier de caméra (5) contre le support (4) dans la position d'attache.

8. Un système d'imagerie (1) selon la revendication 7, **caractérisé en ce que**
- les éléments de ressort comprennent au moins un ressort métallique séparé.

9. Un système d'imagerie (1) selon l'une des revendications précédentes, **caractérisé en ce que**
- l'élément de positionnement (10) prévu au niveau du support (4) comprend un évidement (15), qui s'engage avec l'élément de fixation (16) de l'élément de blocage de lumière (6) lorsque le système d'imagerie (1) se trouve dans la position d'attache.
